# EUROPEAN PATENT APPLICATION

(11) **EP 2 405 197 A1**
(43) Date of publication of application: **11.01.2012**
(21) Application number: 10168481.9
(22) Date of filing: 05.07.2010
(51) Int. Cl.: F23D 14/22, F23D 14/32, F23M 5/02

(54) **Low maintenance combustion method suitable for use in a glass forehearth**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Prabhakar, Rajeev S., Wilmington, DE 19803 (US); Periasamy, Chendhil, 19701 Bear, Delaware (US); Wang, Justin Jian, Newark, DE 19702 (US); Kalcevic, Robert, 78000 Versailles (FR)
(74) Representative: De Vleeschauwer, Natalie Y.L.D.

(57) **Abstract**

A combustion method using a burner recessed from a combustion space in a burner block (1) adjacent the combustion space whereby a secondary reactant (a second portion of a first reactant) is injected around and upstream of a stream of a primary reactant (a first portion of the first reactant) and a stream of a second reactant in order to prevent or inhibit deposition of material from recirculating gases in the combustion space upon the burner. The first reactant is one of a fuel and an oxidant while the second reactant is the other of a fuel and an oxidant. The secondary stream may be injected from a continuous annulus (26) formed in an outer body (25) of the burner or from a plurality of radially spaced holes formed in the outer body. The primary stream is injected from one of an inner bore (30) formed in an inner body (24) of the burner and a reactant annulus (28) defined between the inner and outer bodies while the second reactant is injected from the other of the inner bore (30) and the reactant annulus (28).

## Description

### Background

In the production of glass, molten glass is first formed by melting raw materials in a glass melting furnace. This molten glass passes through a forehearth section to achieve temperature uniformity and required properties, for example, viscosity, before reaching the molding section (or forming machines) where the glass is given the desired shape. The forehearth section is usually a long refractory-lined channel. In the forehearth section, multiple burners are installed to supply heat along the length of the channel to maintain the glass at a very specific temperature profile. A typical forehearth contains tens or even hundreds of burners. Due to the large number of burners, it is extremely beneficial to have burners that require very low maintenance.

Due to the high temperature of molten glass in the forehearth section, volatilization of substances present in the flow channel such as glass, boron, sulfur etc. can occur in significant quantities. These volatilized substances can re-condense on any cooler surfaces present within the forehearth. The outer surface of the burner can be one such relatively low temperature surface due to the cooling action of the fuel and oxidant that continuously flows inside the burner body.

Deposition of volatile substances on the burner body can cause significant issues. If the deposition takes place close to the burner nozzle, over time it can start to block the nozzle and interfere with the flame from the burner. Also, deposits on the burner body can build up over time and seal the gap between the burner and the burner block, thus making the burner difficult to remove from the block. To avoid these issues, regular cleaning of burner bodies may be required. Frequent maintenance of these burners can be expensive and impractical due to the large number of burners normally installed in forehearths. Thus, it is highly desirable to have burners that are less prone to the deposition phenomenon and thus require very little maintenance.

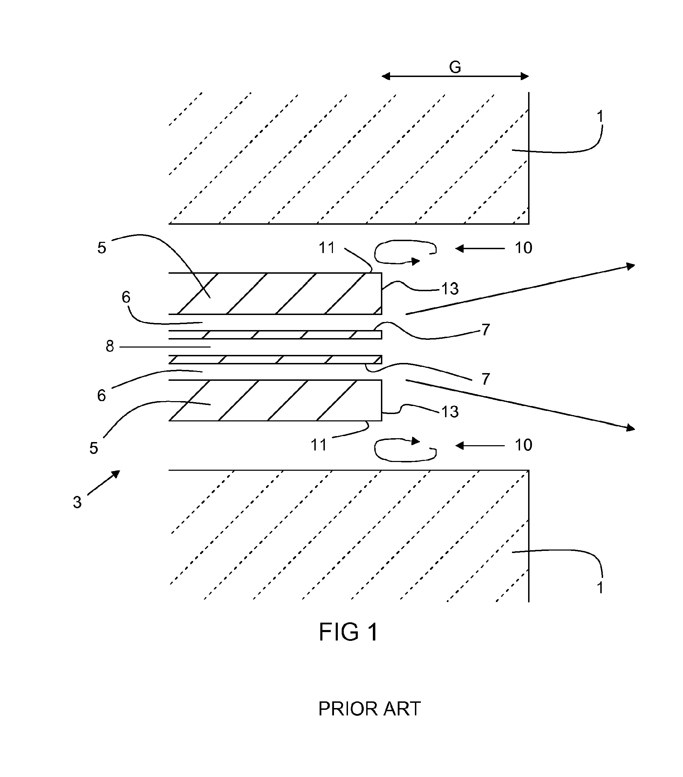

**FIG 1** shows a cross-sectional view of a typical installation of a burner **3** in a burner block **1,** which is a refractory tile containing cylindrical and/or conical openings. The burner **3** is a typical pipe-in-pipe design where an outer pipe **5** concentrically surrounds an inner pipe 7 to define injection space **6** through which one of the reactants (fuel or oxidant) flows and an injection space **8** through which the other of the reactants flows. The burner **3** is inserted from the outside such that its nozzle tip is set back from the refractory opening by a gap **G.** This is done to avoid direct exposure of the burner **3** to the high radiant heat from the forehearth channel. The fuel and oxidant are typically ejected from the burner at relatively high velocities. Due to the high velocity of the reactant streams, low pressure regions (partial vacuum regions) are created in the vicinity of the reactant jets, i.e. close to the tip of the burner and/or also close to the outlet of the block **1.** The low pressure regions within the confined opening of the burner block **1** result in formation of recirculation zones **10** around the tip of the burner 3 and also close to the outlet of the block **1.** Glass vapors from the forehearth channel can get caught up in these recirculating streams **10** and get transported to the burner **3** where they can condense on the relatively cooler surface. To prevent deposits on the burner **3** at surfaces **11, 13** and also on the burner block **1,** it is important to eliminate these recirculation zones and/or to avoid the interaction between the recirculation zones and the tip and body of the burner **3.**

Many have proposed solutions to the above problem.

U.S. Patent No. 5,931,654 discloses the injection of a purge gas coaxially around a nozzle injecting a main gas in order to protect the nozzle from furnace gases entering the burner block passage and attacking the nozzle. It requires that the amount of purge gas injected exceed 50% of the total amount of the main gas and purge gas injected. The purge gas has a velocity of at least 100 ft/s. The nozzle injects only one gas, either fuel or oxidant, and not both simultaneously and hence acts as a lance and not a burner.

U.S. Patent No. 5,295,816 discloses the injection of low velocity gas around a nozzle injecting high velocity gas such that the low velocity gas forms a protective barrier around the nozzle from combustion zone damage. The amount of protective gas injected is in the range of 10-50% of the total amount of gas injected into the cavity. The nozzle injects a single main gas (not fuel and oxidant combined) and the low velocity gas has a composition substantially similar to the main gas. The high velocity gas is at a velocity of 200-2000 ft/s (60.96-609.60 m/s) while the velocity of the low velocity gas is 5-100 ft/s (1.5-30.5 m/s). The disclosure pertains to a lance and not a burner.

Other burners have been proposed that do not explicitly address the issue of volatile deposits.

Published European Patent Application EP 1 669 669 A1 discloses a single injection hole for oxygen provided concentrically with each fuel injection holes and a plurality of secondary oxygen injection holes forming a ring shape. However it concerns a burner with powder body injection and is dedicated to heavy oil combustion.

Published European Patent Application EP 0 653 591 B1 discloses swirling combustion and also secondary oxidant jet and fuel jet parallels. Some ratios between the velocities of the primary and secondary oxygen flows are defined. However, the invention is directed to liquid fuel combustion.

While U.S. Patent No. 6,843,185 B1 discloses the use of injection holes for injecting the primary oxygen. It discloses a mixing chamber and is directed to pulverized solid fuels/coal combustion.

While U.S. Patent No. 6,474,982 B2 discloses injection holes around a central flame, these holes are for both fuel and oxygen. It also uses alternative and annular fuel streams.

While U.S. 5,927,960 discloses a main oxidant outlet, a secondary oxidant supply outlet, and injection holes for oxygen provided concentrically with fuel injection holes, it discloses two oxygen inputs. It also discloses a high secondary oxygen velocity due to accelerating means (convergent or divergent nozzle), a supersonic (subsonic in case of no primary oxidant) velocity of flame gases, and a mixing chamber.

### Summary

The present invention relates to a method for combusting gaseous fuel and an oxidant and the use of said method as defined in the claims attached hereto.

There is disclosed a method for combusting gaseous fuel and an oxidant that includes the following steps. A combustion space is provided that is at least partly defined by a wall having a cavity that communicates with the combustion space. Wall portions adjacent the cavity comprise a burner block. A burner inside the cavity is provided that includes an inner body having an inner bore and coaxial outer body surrounding the inner body. A reactant annulus is defined by outer surfaces of the inner body and inner surfaces of the outer body. The outer body has one or more secondary reactant injection spaces extending therethrough towards the combustion space. A tip of the burner is recessed from the combustion space to define a gap in the cavity therebetween. A first reactant comprising a fuel or an oxidant is provided. A second reactant comprising a fuel or an oxidant is provided, wherein: if the first reactant is a fuel, then the second reactant is an oxidant; and if the first reactant is an oxidant, then second reactant is a fuel. A primary stream of the first reactant is injected from one of the inner bore and the reactant annulus towards the combustion space. A stream of the second reactant is injected from the other of the inner bore and the reactant annulus towards the combustion space. A secondary stream of the first reactant is injected from said one or more secondary reactant injection spaces. The first and second reactants are combusted in the combustion space. The secondary stream of the first reactant exits said one or more secondary reactant injection spaces at a position upstream of where the primary stream of the first reactant and the stream of the second reactant exit the reactant annulus and inner bore.

The disclosed method may include one or more of the following aspects:
- molten glass in a flow channel is heated with heat from said combustion step.
- the one or more secondary reactant injection spaces comprises a continuous annulus coaxial with and surrounding the reactant annulus.
- the one or more secondary reactant injection spaces comprises a plurality of radially spaced holes formed in the outer body.
- the plurality of radially spaced holes comprises 8-10 holes.
- a sleeve is disposed in form-fitting fashion inside the cavity to decrease a volume between the burner and the burner block.
- the secondary stream is injected at a linear velocity greater than that of the primary stream.
- the first reactant is the oxidant and the second reactant is the fuel.
- the primary stream is injected from the inner bore and the fuel is injected from the reactant annulus.
- 15-40% by volume of the first reactant is injected as the secondary stream.
- the secondary stream comprises at least 3% but no more than 50% of a total amount of the first reactant injected by the burner in terms of mass flow rate.

### Brief Description of the Drawings

For a further understanding of the nature and objects of the present invention, reference should be made to the following detailed description, taken in conjunction with the accompanying drawings, in which like elements are given the same or analogous reference numbers and wherein:
**FIG 1** is a cross-sectional side view of a prior art burner.
**FIG 2** is a cross-sectional side view of a first embodiment of a burner.
**FIG 3** is a cross-sectional side view of a second embodiment of a burner.
**FIG 4** is a cross-sectional side view of a third embodiment of a burner.
**FIG 5** is a cross-sectional side view of a fourth embodiment of a burner.
**FIG 6** is a cross-sectional end view of a fifth embodiment of a burner.
**FIG 7** is a cross-sectional side view of a sixth embodiment of a burner.
**FIG 8** is a cross-sectional end view of the sixth embodiment.
**FIG 9** is a photograph of experimental burner Design a from Example 2.
**FIG 10** is a graph of temperature profiles exhibited by various test burners in comparison to a reference case.
**FIG 11** is a graph of O₂ inlet pressure drops for burners in Example 3.

### Description of Preferred Embodiments

A primary advantage of the disclosed method is elimination or at least partial decrease in the formation of deposits on the burner from condensed glass vapors. By injecting the secondary reactant around and upstream of the primary reactant and co-reactant, this advantage is realized. This type of injection establishes at least a partial purge of the volume in between the burner and the burner block to shift the recirculation zone away from the burner and towards the combustion chamber. Within the burner itself, one of the reactants is injected from an inner bore while the other reactant is injected from an annulus surrounding the inner bore. While the fuel may be injected in primary and secondary injections and only a single portion of oxidant is injected, preferably, the fuel is injected in a single portion and the oxidant is injected in both primary and secondary injections. Most preferably, the primary oxidant is injected from the annulus surrounding the inner bore, the fuel injected through the inner bore, and the secondary oxidant is injected around and upstream of the injections of the fuel and the primary oxidant. The fuel is preferably natural gas or propane. While the oxidant may be air, pure oxygen, or oxygen-enriched air up to 100% oxygen, preferably it is oxygen having a purity of at least 90% (by volume). Either or both of the injection of the reactants from the inner bore and the annulus surrounding the bore may be swirled. The use of a swirl allows achievement of a same flame length at a different burner power.

The above advantage is better realized when the mass flow rate of the secondary reactant, the linear velocity of the secondary reactant, and the allocation of the reactant between primary and secondary injections is carefully selected.

With respect to the mass flow rate of the secondary reactant, the mass flow rate of the secondary reactant should be in the range of from no less than 3% and no more than 50% of the total flow rate of the reactant (both primary and secondary).

With respect to the linear velocity, it is preferable that the average linear velocity (normalizing for the differences of mass flows) of the primary and secondary reactants be similar to the linear velocity of the primary reactant when the entire reactant requirement is satisfied by primary reactant injection (no secondary reactant is injected). However, it is preferable that the linear velocity of the secondary reactant exceed that of the primary.

With respect to the allocation of reactant between primary and secondary, it is desirable to inject the secondary reactant under the above mass flow rate and linear velocity conditions without requiring too much of the total reactant flow to be injected as the secondary reactant in order to maintain the same properties of the combustion that are achieved with both primary/secondary reactant injection and only primary reactant injection. Preferably, the proportion of the secondary reactant is in the range of from about 5% to about 40% of the total flow rate of the primary and secondary reactant. More preferably, this proportion is in the range of from about 15% to about 40% of the total flow rate of primary and secondary reactant. Even more preferably, this proportion is in the range of from about 25-35% (most preferably about 30%)

The above preferences, goals, and advantage are best realized by the following embodiments.

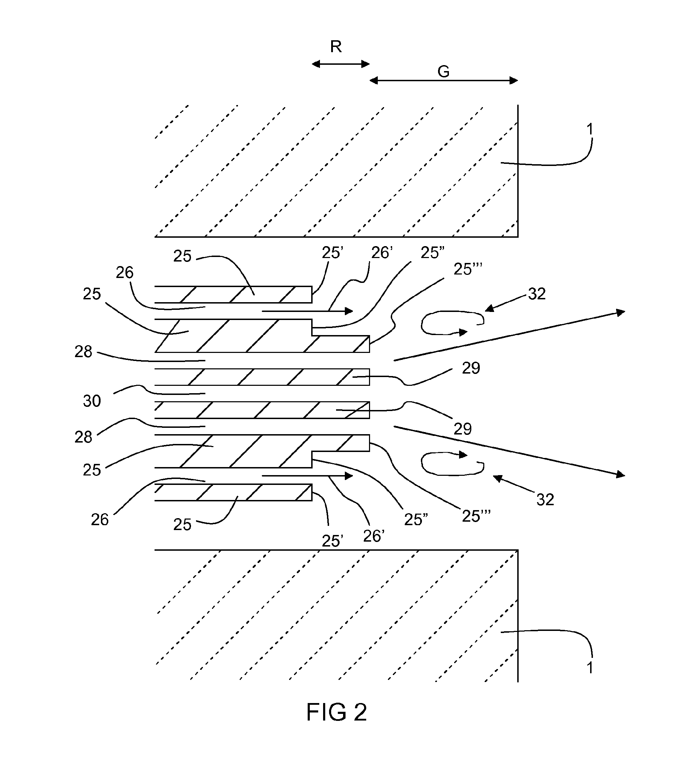

As best illustrated in **FIG 2****,** in a first embodiment a tip of a burner is recessed from an opening in a burner block **1** (and hence the combustion chamber) by a gap **G.** The burner includes a cylindrical outer body **25** through which a secondary reactant injection space **26** extends. The secondary reactant space **26** may be configured as a plurality of radially spaced holes or as a continuous annulus. The burner also includes a cylindrical inner body **29** through which an inner bore **30** extends. The outer body **25** includes outer tip portions **25', 25"** which are recessed from inner tip portion **25'"** and the tip of the inner body **29** by a recess **R.** Between the outer body **25** and the inner body **29** is defined an annular gap **28.**

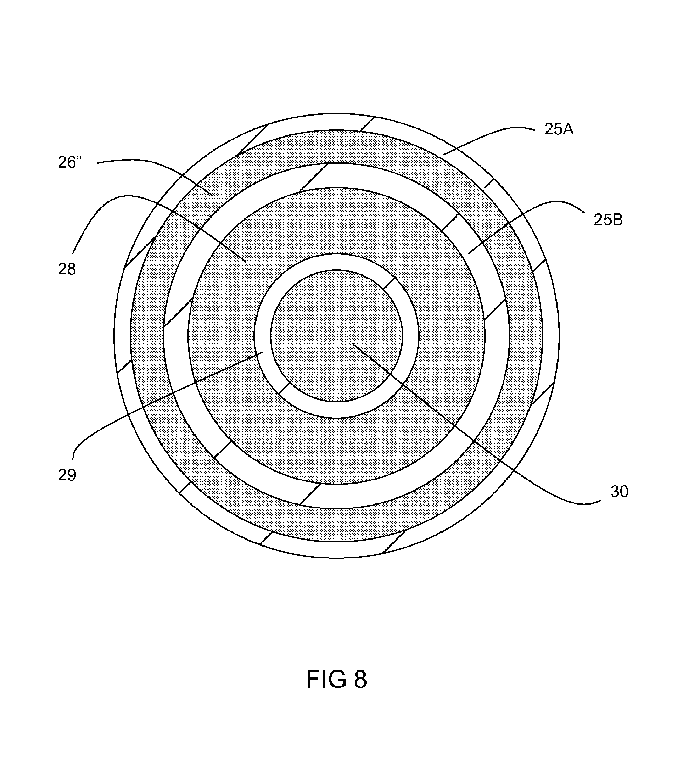

With reference to **FIGS 2-8****,** the reactants may be injected by the burner under any of the permutations in Table I.

**Table I: Options for injecting reactants through burner**

| | inner bore **30** | annular gap **28** | secondary injection space |
|---|---|---|---|
| fuel is first reactant: 1 st option | primary fuel | oxidant | secondary fuel |
| fuel is first reactant: 2nd option | oxidant | primary fuel | secondary fuel |
| | | | |
| oxidant is first reactant: 1st option | primary oxidant | fuel | secondary oxidant |
| oxidant is first reactant: 2nd option | fuel | primary oxidant | secondary oxidant |

In operation, a primary portion or stream of one of the reactants (the fuel or the oxidant), referred to as the first reactant, is injected through either the inner bore **30** or the annular gap **28.** The other or second reactant is injected by either of the following ways: through the annular gap **28** when the primary portion of the first reactant is injected through the inner bore **30;** or through the inner bore **30** when the primary portion of the first reactant is injected through the annular gap **28.** Another or secondary portion or stream of said first reactant is injected from secondary injection space **26** starting from a position adjacent outer tip portions **25', 25"** and flows along path **26'** across recess **R** to a position adjacent inner tip portion **25'"** and thence forward to recirculation zone **32.** The primary portion of the first reactant is also referred to as the primary reactant, whereas the secondary portion of the first reactant is referred to as the secondary reactant.

It should be understood that the primary and secondary oxidants can be supplied with a single source of oxidant and primary and secondary fuels can be supplied with a single source of fuel. Preferably, the fuel is injected through inner bore **30,** the primary oxidant is injected through annulus **28** and the secondary oxidant is injected through secondary reactant injections space **26.**

Because the injection of the secondary reactant is recessed back from the outer tip portion 25'" and the tip of the inner body **29,** the secondary reactant achieves at least a partial purge of the space in between the burner and the burner block **1.** In effect, it shifts the recirculation zone **32** to a position closer to the combustion chamber in comparison to conventional burners without this kind of secondary reactant injection. Because the recirculation zone **32** is shifted away from the burner, formation of deposits upon the burner from condensation of glass vapors are either prevented or at least inhibited.

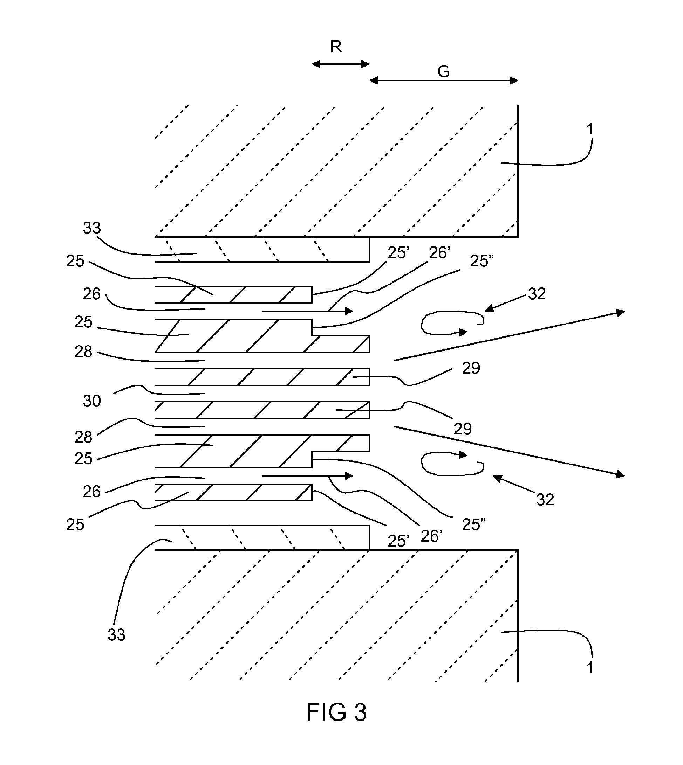

As best shown in **FIG 3****,** a second embodiment is similar to the first embodiment, except that it includes a sleeve **33** concentrically surrounding outer and inner bodies **25, 29.** As shown, sleeve **33** may extend into the burner block **1** as far as the inner body **29** so that it is set back from the combustion chamber by gap **G.** Alternatively, it may extend only as far as the outer body **25** so that it is set back from the combustion chamber by a distance equal to the sum of gap **G** and recess **R** or the sleeve **33** may extend beyond the inner body **29.** The sleeve should be made of metal, preferably stainless steel INOX or Inconel. Preferably, its end (facing the combustion chamber) should be tapered inwardly. The presence of the sleeve **33** reduces the overall volume between the burner and the burner block 1 for secondary reactant flow. Thus, simply by adding the sleeve **33,** the velocity of the secondary reactant just upstream of the recirculation zone **32** is higher in comparison to the first embodiment of **FIG 2****.** While reduction of the volume in between the burner and the burner block 1 is desirable for this reason, it is also preferable to allow at least some space between the burner and the sleeve **33** to maintain sufficient cooling of the burner.

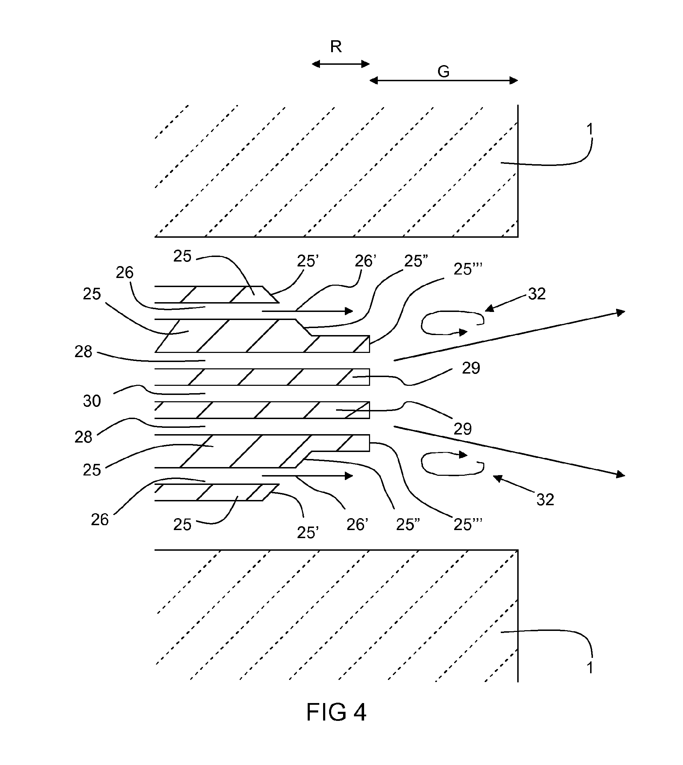

As best illustrated in **FIG 4****,** a third embodiment is similar to the first embodiment, except that the outer body **25** tapers inwardly at outer tip portions **25', 25".**

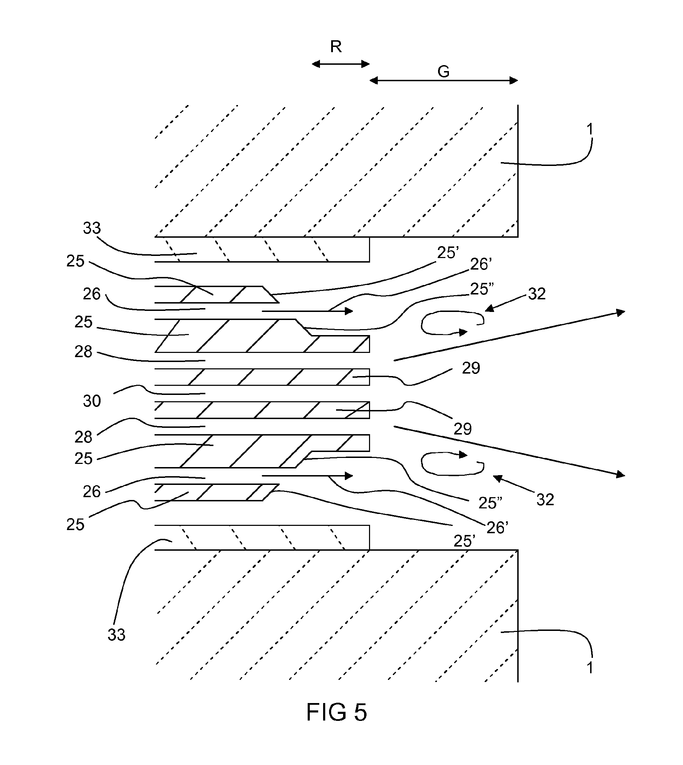

As best shown in **FIG 5****,** a fourth embodiment is similar to the third embodiment, except that it includes a sleeve **33** concentrically surrounding outer and inner bodies **25, 29.** As shown, sleeve **33** may extend into the burner block **1** as far as the inner body **29** so that it is set back from the combustion chamber by gap **G.** Alternatively, it may extend only as far as the outer body **25** so that it is set back from the combustion chamber by a distance equal to the sum of gap **G** and recess **R** or the sleeve **33** may extend beyond the inner body **29.** The sleeve should be made of metal, preferably stainless steel INOX or Inconel. Preferably, its end (facing the combustion chamber) should be tapered inwardly. The presence of the sleeve **33** reduces the overall volume between the burner and the burner block **1** for secondary reactant flow. Thus, simply by adding the sleeve **33,** the velocity of the secondary reactant just upstream of the recirculation zone **32** is higher in comparison to the first embodiment of **FIG 2****.** While reduction of the volume in between the burner and the burner block 1 is desirable for this reason, it is also preferable to allow at least some space between the burner and the sleeve **33** to maintain sufficient cooling of the burner.

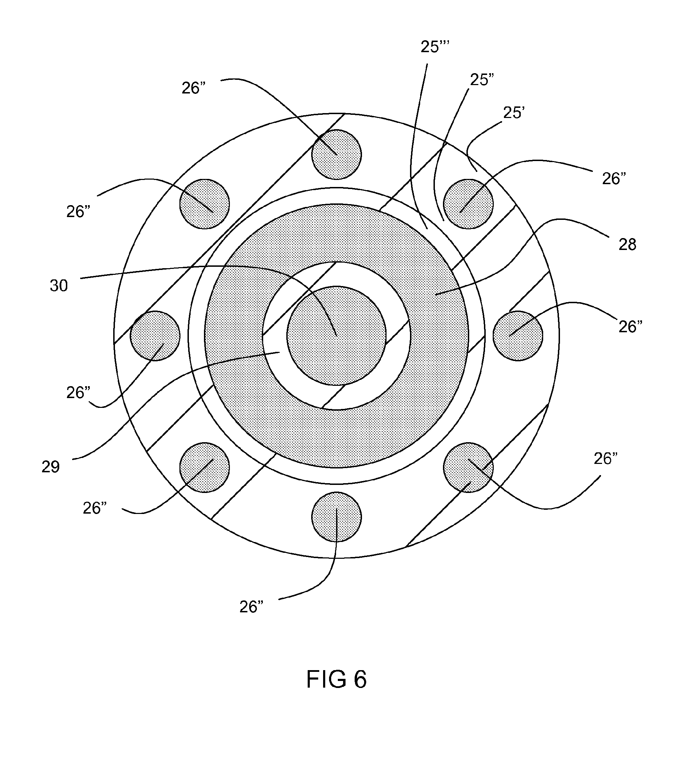

As best illustrated in **FIG 6****,** in a fifth embodiment the secondary injection space **26** is comprised of a plurality of radially spaced bores **26".** While a total of eight bores **26"** are depicted, there may be as few as two or as many as twelve. Preferably, there are six to twelve. Most preferably, there are eight to ten for a homogenous repartition of the flow. Regardless of how many bores **26"** are present, the configuration of **FIG 6** may be utilized for any of the first, second, third, or fourth embodiments. When the configuration of **FIG 6** is applied to any of these embodiments, outer tip portions **25', 25"** (hence an outer portion of the outer body **25**) and inner tip portion **25'"** (hence an inner portion of the outer body **25**) are preferably machined from a single piece of material. While the axis of the bores **26"** preferably parallel to those of the inner and outer bodies **29, 25,** they can form a small angle (preferably no more than 30° and more preferably no more than 15°) with the axis of the inner and outer bodies **29, 25.** Under identical mass flow rate conditions, one of ordinary skill in the art will recognize that a relatively smaller total cross-sectional area of the bores **26"** will achieve a greater linear velocity than that achieved by a larger total cross-sectional area. Thus, if fewer bores **26"** are desired, a relatively large diameter is preferably selected. Similarly, if more bores **26"** are desired, a relatively small diameter may be selected. Generally speaking, the reduction in the cross-sectional area for the secondary reactant flow will increase its linear velocity and thus enhance its effectiveness in opposing the recirculating gases **32.**

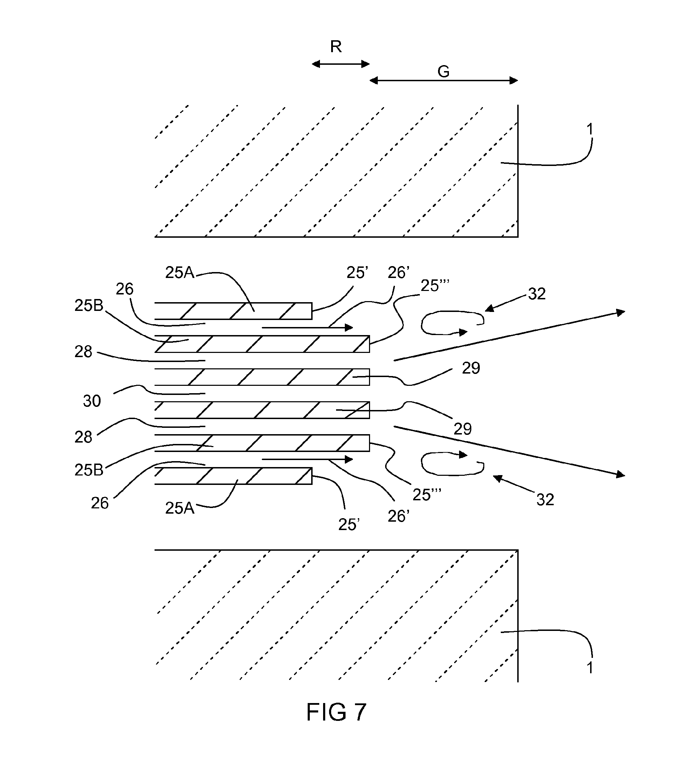

As best shown in **FIGS 7-8****,** in a sixth embodiment a pipe-in-pipe-in-pipe configuration is used. A tip of a burner is recessed from an opening in a burner block **1** (and hence the combustion chamber) by a gap **G.** The burner includes a first outer body element **25A** that concentrically surrounds a second outer body element **25B** which in turn concentrically surrounds an inner body **29.** The outer tip portion **25'** of the first outer body element **25A** is recessed from inner tip portion **25'"** of the second outer body element **25B** by a recess **R.** Between the second outer body element **25B** and the inner body **29** is a reactant annulus. Between the first and second outer body elements **25A, 25B** is a secondary reactant annulus **26".** An inner bore **30** is formed in the inner body **29.**

In operation, a primary portion or stream of one of the reactants (the fuel or the oxidant), referred to as the first reactant, is injected through either the inner bore **30** or the annular gap **28.** The other or second reactant is injected by either of the following ways: through the annular gap **28** when the primary portion of the first reactant is injected through the inner bore **30;** or through the inner bore **30** when the primary portion of the first reactant is injected through the annular gap **28.** Another or secondary portion or stream of said first reactant is injected from secondary reactant annulus **26"** (secondary injection space **26**) starting from a position adjacent outer tip portion **25'** and flows along path **26'** across recess **R** to a position adjacent inner tip portion **25'"** and thence forward to recirculation zone **32.** The primary portion of the first reactant is also referred to as the primary reactant, whereas the secondary portion of the first reactant is referred to as the secondary reactant. It should be understood that the primary and secondary oxidants can be supplied with a single source of oxidant. Since the secondary reactant is injected through a continuous annulus **26"** and not a plurality of holes, the radial thickness (i.e., the difference between the inner and outer diameters) should be minimized, otherwise, too low of a linear velocity for the secondary reactant injection will be realized. Because the injection of the secondary reactant is recessed back from the tip **25'"** of the second inner body portion **25B** and the tip of the inner body **29,** the secondary reactant achieves at least a partial purge of the space in between the burner and the burner block **1.** In effect, it shifts the recirculation zone **32** to a position closer to the combustion chamber in comparison to conventional burners without this kind of secondary reactant injection. Because the recirculation zone **32** is shifted away from the burner, formation of deposits upon the burner from condensation of glass vapors are either prevented or at least inhibited.

### Examples

Example 1: Computational fluid dynamic modeling was performed for a burner using 8 secondary reactant injection holes with a diameter of 1 mm. 15% of the total oxidant (02) was allocated to secondary injection and 85% to primary injection. Based on the model prediction, the linear velocity at the secondary reactant injection holes is 32m/s while the linear velocity of the primary reactant at the burner tip is 28m/s. Thus, the secondary reactant linear velocity is larger than that of the primary reactant. One of ordinary skill in the art will recognize that if the number and diameter of holes are kept constant, a relatively greater allocation of the total oxidant to the secondary instead of primary will have the effect of increasing the linear velocity of the secondary.

Example 2: A series of tests was conducted for the purpose of verifying that injection of a secondary reactant (in this case oxygen) will not significantly change the heat profile and location of hot spots in a furnace comparison with a reference case: the ALGLASS FH burner without any secondary O₂ injection (fuel is natural gas). Tests were conducted in a pilot furnace under the following conditions: nominal burner power of 4 kW; O₂ ratio of 2.3 (the total oxygen flow rate divided by the total fuel flow rate); and a stable temperature in the combustion space of around 1,300 °C. In order to assess differences of temperature profile produced by the various examples, the temperature of the block top surface at three points and the temperature of the bottom of the combustion space at four points were measured with thermocouples. It should be noted that the secondary injection holes were equally spaced (radially) around the inner bore reactant annulus. Each run also included a check for soot formation. The various parameters utilized in the tests are found below in Table I.

**Table II: Burner Parameters**

| Design | Number of Holes | Percent of O₂ Injection in Secondary | Hole Diameter (mm) | Cross-sectional Area of Primary Injection (mm²) | Primary Oxidant Velocity (m/sec) | Secondary Oxidant Velocity (m/sec) | Average Velocity (m/sec) |
|---|---|---|---|---|---|---|---|
| a | 8 | 15 | 1 | 45.62 | 4.61 | 5.42 | 4.05 |
| b | | | | 33.66 | 6.24 | | 5.44 |
| c | | 30 | 1.5 | 45.62 | 3.74 | | 3.15 |
| d | | | | 24.16 | 7.06 | | 5.44 |

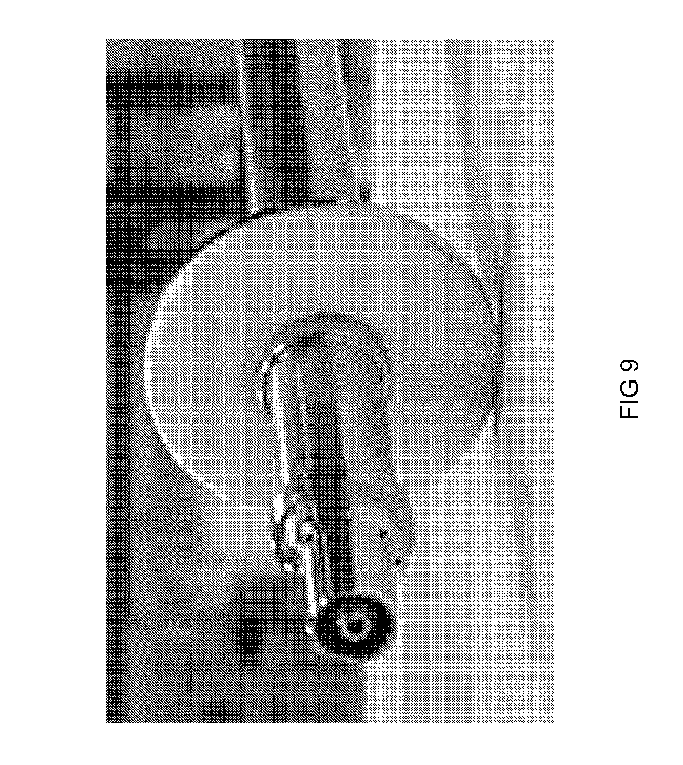

As best shown in **FIG 9****,** Design a utilized a nozzle length of 65 mm with 8 equally spaced holes of 1 mm diameter was used.

Design b was the same as Design a, except that an adjustment of area for the injection of primary oxygen was made so that the average velocity (taking into account differences of mass flow) for the total of the primary and secondary injections could be the same or at least be very close to the original O₂ velocity (5.44 m/s) when the burner is operated without secondary oxygen.

Design c was the same as design a, except that the hole diameter was 1.5 mm. The diameter of each hole for Designs a and c was determined so that the cross-sectional areas for the holes represents around:
- 15 % of the total area for O₂ injection (primary and secondary) for a hole diameter of 1 mm.
- 30 % of the total area for O₂ injection (primary and secondary) for a hole diameter of 1.5 mm.

Design d was the same as Design c, except that an adjustment of area for injection of the primary oxygen was made so that the average velocity (taking into account differences of mass flow) for the total of the primary and secondary injections could be the same or at least be very close to the original O₂ velocity (5.44 m/s) when the burner is operated without secondary oxygen.

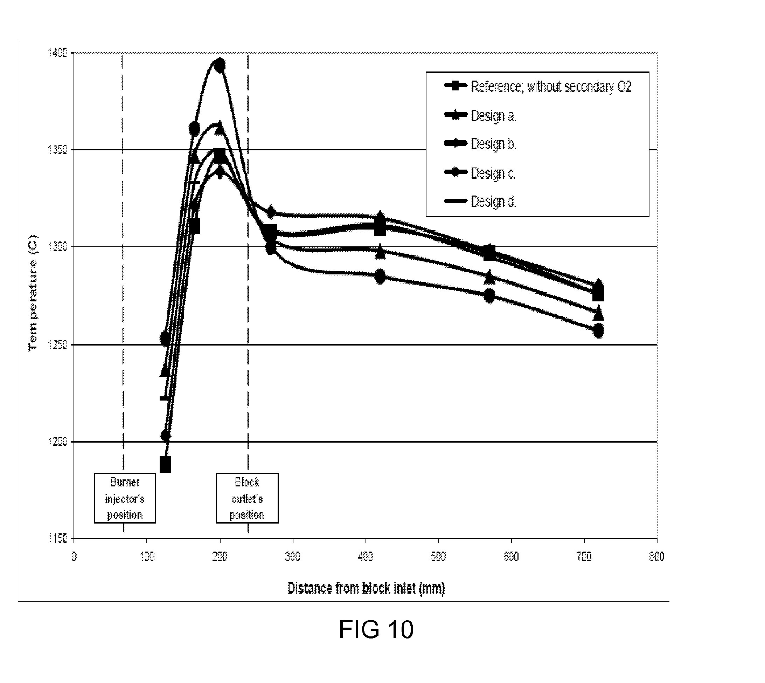

**FIG 10** graphically shows the obtained temperature profiles for each of the designs a-d and the base reference case.

Several observations may be made.

A check for soot formation did not reveal soot formation for any of the burners.

When the primary oxidant injection area is not adjusted properly in order to obtain the required average velocity for O₂ (Designs a and c), the mixing of the fuel and oxygen changes in such way that the heat released inside the block significantly increases. This has the effect of decreasing the heat transferred to the load (as represented by the temperature of the combustion chamber bottom surface). Indeed, obtaining proper mixing conditions is important for achieving suitable combustion conditions and flame specifications. It confirms the relevance of using secondary O₂ injection regarding a burner instead of a lance in order to control flame shape and heat transfer. Further, by properly adjusting the linear velocity, one can prevent deposit formation.

Injection of 30% of the oxidant (O₂) as the secondary achieves a temperature profile very close to the base reference case for both the block top surface and the chamber bottom surface. Using only 15% instead of 30% slightly changes the temperature profile, but the profile still remains acceptable from a practical standpoint. Nevertheless, it appears to be more suitable to use 30% instead of 15%.

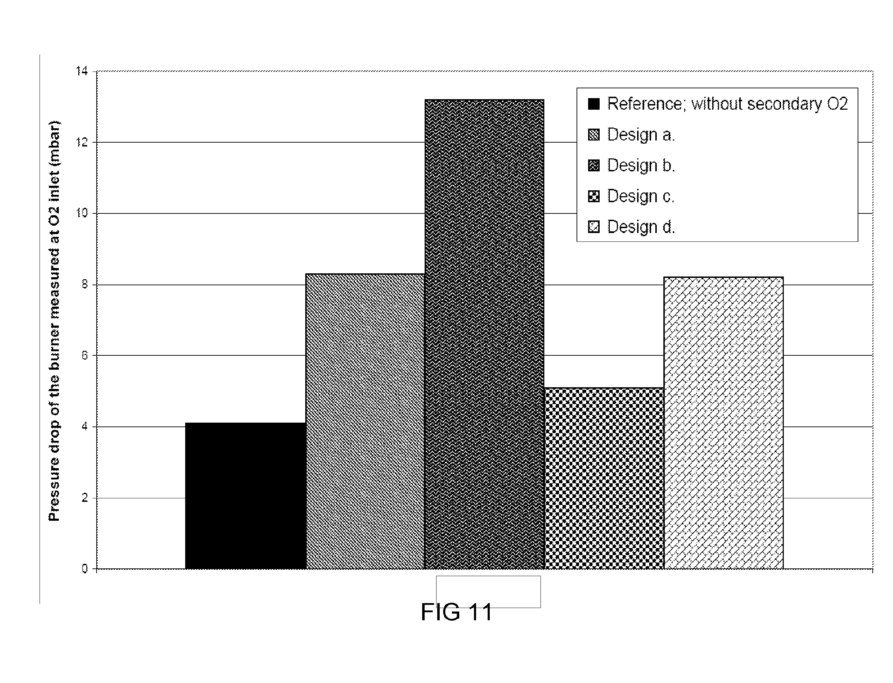

Example 3: The pressure itself across the secondary holes is not known. However, pressure drops were measured for both O₂ and natural gas inlets for each of Designs a-d of Example 2 and for the base reference case during the pilot tests of Example 2. The O₂ inlet pressure drop measurements are presented in **FIG 11. FIG 11** demonstrates that there is an oxygen flow that passes through the holes since the global pressure drop increases, even if the diameter of the hole is the smallest considered one, i.e. 1 mm. The use of bigger holes (1.5 mm for diameter) representing 30 % of the total flow results in a pressure drop close to the base reference case. Moreover, reducing the area for primary injection of course increases the pressure drop. Considering the best case so far observed (Design d) the pressure is almost multiplied by two in comparison with the base reference case. However, the O₂ pressure drop still remains relatively small and very acceptable for industrial applications: around 8 mbar only.

Preferred processes and apparatus for practicing the present invention have been described. It will be understood and readily apparent to the skilled artisan that many changes and modifications may be made to the above-described embodiments without departing from the spirit and the scope of the present invention. The foregoing is illustrative only and that other embodiments of the integrated processes and apparatus may be employed without departing from the true scope of the invention defined in the following claims.

## Claims

1. A method for combusting gaseous fuel and an oxidant, in a combustion space at least partly defined by a wall having a cavity that communicates with the combustion space, whereby wall portions adjacent the cavity comprise a burner block (1), by means
of a burner inside the cavity, said burner comprising an inner body (29) having an inner bore (30) and a coaxial outer body (25) surrounding the inner body (29), a reactant annulus (28) being defined by outer surfaces of the inner body (29) and inner surfaces of the outer body (25), the outer body (25) having one or more secondary reactant injection spaces (26) extending therethrough towards the combustion space, a tip of the burner being recessed from the combustion space to define a gap (G) in the cavity between the tip and the combustion space, the method comprising:
• providing a first reactant comprising a fuel or an oxidant;
• providing a second reactant comprising a fuel or an oxidant, wherein:
if the first reactant is a fuel, then the second reactant is an oxidant;
if the first reactant is an oxidant, then second reactant is a fuel;
• injecting a primary stream of the first reactant from one of the inner bore (30) and the reactant annulus (28) towards the combustion space;
• injecting a stream of the second reactant from the other of the inner bore (30) and the reactant annulus (28) towards the combustion space;
• injecting a secondary stream of the first reactant from said one or more secondary reactant injection spaces (26); and
• combusting the first and second reactants in the combustion space, wherein the secondary stream of the first reactant exits said one or more secondary reactant injection spaces (26) at a position upstream of where the primary stream of the first reactant and the stream of the second reactant exit the reactant annulus (28) and inner bore (30).

2. The method of claim 1, wherein the one or more secondary reactant injection spaces (26) comprises a continuous annulus coaxial with and surrounding the reactant annulus.

3. The method of claim 1, wherein the one or more secondary reactant injection spaces comprise a plurality of radially spaced holes (26") formed in the outer body (25).

4. The method of claim 3, wherein the plurality of radially spaced holes(26") comprises 8-10 holes.

5. The method of any one of claims 1 to 4, wherein a sleeve (33) is disposed in form-fitting fashion inside the cavity to decrease a volume between the burner and the burner block (1).

6. The method of any one of claims 1 to 5, wherein the secondary stream is injected at a linear velocity greater than that of the primary stream.

7. The method of any one of claims 1 to 6, wherein the first reactant is the oxidant and the second reactant is the fuel.

8. The method of claim 7, wherein the primary stream is injected from the inner bore (30) and the fuel is injected from the reactant annulus (28).

9. The method of any one of claims 1 to 8, wherein 15-40% by volume of the first reactant is injected as the secondary stream.

10. The method of any one of claims 1 to 8, the secondary stream comprises at least 3% but no more than 50% of a total amount of the first reactant injected by the burner in terms of mass flow rate.

11. The method of any one of claims 1 to 10,
whereby:
• the inner body (29) terminates at an inner body tip,
• the outer body (25) has an outermost portion and an innermost portion, the outermost portion of the outer body terminating at an outermost outer body tip (25') and the innermost portion of the outer body terminating at an innermost outer body tip (25"'),
whereby furthermore:
• each of the innermost outer body tip (25"') and the inner body (29) tip are recessed back from the combustion spore to define a gap (G) in the cavity between respectively the innermost outer body tip (25"') and the combustion space and the inner body (29) tip and the combustion space, and
• the outermost body tip (25') is recessed back from the innermost outer body tip (25"') and the inner body (29) tip, so that, the secondary stream exits the one or more secondary reactant injection spaces (26) upstream of where the primary stream of the first reactant and the stream of the second reactant exit the inner bore (30) and the reactant annulus (26).

12. A method of any one of claims 1 to 11, whereby the combustion chamber is part of furnace.

13. Use of the method of any one of claims 1 to 12 for heating molten glass in a flow channel.
